# EUROPEAN PATENT APPLICATION

(11) **EP 4 769 863 A1**
(43) Date of publication of application: **01.07.2026**
(21) Application number: 24223425.0
(22) Date of filing: 27.12.2024
(51) Int. Cl.: H02J 3/32, H02J 7/00

(54) **FIRMWARE LOADING SOLUTION FOR CELL MANAGEMENT SYSTEMS OF A POWER SUPPORTING SYSTEM**

(71) Applicant: Hitachi Energy Ltd, 8050 Zürich (CH)
(72) Inventor: Ajit Kamble, Monika, 722 27 Västerås (SE); Tenerz, Mikael, 723 48 Västerås (SE); Karreby, Per, 721 83 Västerås (SE); Zhang, Hongyang, 115 24 Stockholm (SE); Fan, JianZhong, 771 43 Ludvika (SE); Bai, Haofeng, 723 48 Västerås (SE)
(74) Representative: AWA Sweden AB

(57) **Abstract**

The present disclosure relates to a power supporting system (1) comprising an energy storage system (100), ESS, comprising at least one string (S-1, S-M). Each string (S-1, S-M) comprises at least two energy storage racks electrically connected in series. Each energy storage rack comprises at least one energy storage module (ESM-1, ESM-N). Each energy storage module (ESM-1, ESM-N) comprises at least one energy storage cell (C-1, C-2, C-X), and a cell management system (xMS-1, xMS-N) configured to manage said at least one energy storage cell. The power supporting system (1) comprises at least one control device (10, 10-1, 10-M), and at least one primary communication unit (20-1, 20-M), PCU, each PCU (20-1, 20-M) configured to provide a dedicated communication channel between at least one of said at least one control device (10, 10-1, 10-M) and CMSs (xMS-1, xMS-N) of one of said strings (S-1, S-M). Said at least one control device (10, 10-1, 10-M) and said at least one PCU (20-1, 20-M) are arranged remotely relative to said ESS (100). Said at least one control device (10, 10-1, 10-M) is configured to control, by communication via said dedicated communication channels, a remote firmware loading process to update said CMSs (xMS-1, xMS-N) of said at least one string (S-1, S-M). A method of updating CMSs of a power supporting system (1) is also disclosed.

## Description

### Technical Field

The present disclosure relates to a firmware loading solution for cell management systems of a power supporting system, and to a method of updating cell management systems of a power supporting system.

### Background

A STATCOM, or Static Synchronous Compensator, is a device used in power systems to regulate voltage and improve the stability of the electrical grid. It is a type of Flexible AC Transmission System (FACTS) device that provides reactive power compensation, which helps to maintain the voltage levels within a desired range. Some applications of STATCOMs include wind and solar farms, industrial plants, and transmission and distribution networks.

Some STATCOMs are enhanced with an energy storage system, ESS. These STATCOMs are sometimes referred to as ESTATCOMs (Energy Storage-enhanced Static Synchronous Compensator). This allows for not only providing reactive power but also for injecting or absorbing active power from the electrical grid.

The ESSs of ESTATCOMs have many batteries or capacitor modules, each capacitor module comprising series connected capacitor cells and a capacitor management system (CMS). Such ESS uses at least thousands of modules and thus thousands of CMS. The CMS is a controller which monitors and collects important information and faults from the supercapacitor cells like temperature, voltage, state of health etc. The CMS needs firmware updates from time to time for improved functionality and performance. However, due to the large number of CMSs in ESTATCOMs, maintenance time and effort is significant.

In view of the above, it is of interest to provide a solution which alleviates at least some of the problems of current ESTATCOM systems.

### Summary

It is an object of the present disclosure to provide an improved solution that alleviates at least some drawbacks with present methods and systems. This and other objects, which will be implicitly and explicitly detailed in the following disclosure, are solved by one or more of the inventions defined in the claims. Additional advantageous embodiments are described in the following.

According to a first aspect of the present disclosure, a power supporting system is provided. The power supporting system comprises an energy storage system, ESS. The ESS comprises at least one string. Each string of said at least one string comprises at least two energy storage racks electrically connected in series. Each energy storage rack comprises at least one energy storage module. Each energy storage module of said at least one energy storage module comprises: at least one energy storage cell, and a cell management system configured to manage said at least one energy storage cell. The power supporting system further comprises: at least one control device, and at least one primary communication unit, PCU. Each PCU is configured to provide a dedicated communication channel between at least one of said at least one control device and CMSs of one of said at least one string. Said at least one control device and said at least one PCU are arranged remotely relative to said ESS. Said at least one control device is configured to control, by communication via said dedicated communication channels, a remote firmware loading process to update said CMSs of said at least one string.

The power supporting system advantageously provides remote loading of firmware of a selection of CMSs across at least one string. By removing the requirement of connecting locally with each CMSs of the ESS to update firmware, CMSs can be updated without anyone on site, thereby facilitating the process of updating firmware of said CMSs.

Further, the power supporting system advantageously provides parallel loading of firmware of a selection of CMSs across energy storage racks of a single string and of a selection of CMSs across energy storage racks across multiple strings. This significantly reduces the time required to update a plurality of CMSs of an ESS with new firmware, which is particularly advantageous for large systems which may comprise up to thousands of CMSs or more. An energy storage rack may define a group of CMSs. The parallel loading of firmware may be initiated in parallel for groups of CMSs of said at least two energy storage racks. Each group of CMSs (of a respective energy storage rack) may be updated with firmware in a sequential manner. In other words, a selection of CMSs may include at least one CMS of a respective energy storage rack of at least one string.

Further, the dedicated communication channels of the power supporting system may advantageously be used to verify firmware version of CMSs remotely. While firmware version can be manually verified by a user on site, or verified based on records of firmware updates, remote firmware version verification facilitates the process of verifying whether a firmware update is needed. As a non-limiting example, CMSs of the power supporting system may have different versions of firmware if one or more energy storage module have been replaced, and the CMS of the new energy storage module is provided with old firmware. Thus, the remote firmware loading process may be applied so as to update all CMSs or anyone in particular to a desired firmware version. The remote firmware loading process may also be applied if a current version of firmware is determined to contain a software defect or program anomaly to update all CMSs or anyone in particular to a desired firmware version.

The power supporting system may be a system designed to provide, manage, and/or enhance the delivery and stability of electrical power of a power transmission system and/or power distribution system. A power transmission system is generally a system responsible for transporting electricity from power plants (where it is generated) to substations near populated areas or industrial centers. A power distribution system is generally a system delivering it to homes, businesses, and industries at lower, usable voltages. In other words, a power distribution system generally relates to the final stage of electrical power delivery to end-users. The power supporting system may advantageously provide reliable power distribution, backup, and/or conditioning to support various devices, processes, or networks. Such systems are preferable in environments where continuous power is critical, such as in industrial settings, data centers, and utility grids. The power supporting system may comprise means for power generation (e.g., generators, renewable sources). The power supporting system may comprise means for power generation (e.g., transformers, switchgear). The power supporting system may comprise means for power conditioning (e.g., voltage regulators, surge protectors).

The power supporting system comprises an energy storage system, and the energy storage system comprises at least one string. The number of strings may depend on the application of the power supporting system. As a non-limiting example, the power supporting system may comprise only 1 string or 2 strings, or any number of M strings, wherein M is a number in an interval of 2 to 10, 11 to 20, 21 to 30, or more.

A string in an energy storage system, ESS, is an arrangement comprising at least one energy storage module. Optionally, the string comprises a plurality of energy storage modules arranged in a series configuration and/or a parallel configuration to achieve a desired voltage and current level. Each string may be configured to act as a distinct energy storage arrangement within the ESS, where the energy storage modules within it contribute cumulatively to its capacity and performance. Multiple strings can be connected in parallel to increase the overall storage capacity, enabling flexible scalability and redundancy in the ESS. Each string may comprise at least one energy storage rack, each energy storage rack comprising at least one energy storage module. The string may comprise a plurality of energy storage modules in each energy storage rack. In the case of a plurality of energy storage racks, at least two energy storage racks may be connected in series. As a further option, the string may also comprise energy storage racks which are connected in parallel in combination with the at least two energy storage racks connected in series.

The at least one energy storage module of the ESS may be seen as a sub-unit of the ESS. Each energy storage module comprises at least one energy storage cell and a cell management system. The at least one energy storage module may be configured to serve as a primary building block of the ESS, with each energy storage module designed to store and discharge electrical energy as needed. The at least one energy storage module of a string may be configured to be independently managed and monitored, allowing for optimized energy management and maintenance within each string.

The energy storage cells of the ESS may be seen as the fundamental electrochemical units within the ESS that directly store and release electrical energy. Each energy storage module comprises at least one energy storage cell. At least one energy storage module may comprise a plurality of energy storage cells. By incorporating a plurality of energy storage cells, a desired voltage and capacity levels may be reached in a more cost-effective and/or space-effective manner. Depending on the application, energy storage cells may utilize various chemistries, such as lithium-ion, solid-state, or lead-acid, to balance energy density, cycle life, and efficiency requirements. The ESS may be configured with its energy storage cells being batteries, super-batteries, capacitors, or super-capacitors, or any combination thereof.

Said at least one cell management system, CMS, may be configured to monitor and manage individual energy storage cells of said at least one energy storage cell. Each CMS is preferably integrated with a respective energy storage module with which said CMS is associated with. The CMS may be configured to balance charge levels and/or monitor cell temperature and/or prevent overcharge or over-discharge by controlling operation of one or more switches of the energy storage cells or protection circuits thereof. Thereby, a CMS may advantageously be used to ensure safe operating conditions for each cell. At least one CMS or each CMS may comprise a dual memory module. A first memory module may be configured to store a current version of firmware. A second memory module may be configured to receive a new version of firmware. At least one CMS or each CMS may comprise a bootloader configured to reset said CMS and boot with the newer version of firmware, or if necessary, reset said CMS and boot with an older version of firmware. As an alternative to a bootloader, a local control device may be configured to perform said resetting and said switching. The bootloader may be configured to carry out a local firmware loading process if the remote firmware loading process is determined to have failed.

The at least one control device is configured to control a remote firmware loading process to update said CMSs of said at least one string. Each control device may comprise a user interface. Said user interface advantageously provides an operator to interact with the control device to input commands and/or view a status of the power supporting system. Said user interface may comprise any one of buttons, duals, touchscreens, and keypads. Each control device may comprise a power supply. The control devices may comprise a common power supply. The power supply may be configured to provide electrical power to the at least one control device, or any elements thereof. Each control device may comprise a processing unit. The processing unit may be configured to process input data according to a predetermined processing scheme so as to output at least one command. Said input data may comprise information about the energy storage system, any one of the energy storage modules, any one of the energy storage cells, and/or any one of the CMSs. Each control device may comprise a memory storage module configured to store firmware, configuration settings, and/or temporary data for processing. Each control device may comprise a communication interface. The communication interface may be configured to provide data exchange between the control device and other systems or networks. The communication interface of each control device may be configured to provide data exchange between said control device and at least one PCU of said at least two PCUs. In the case of a central control device, the communication interface of the central control device may be configured to provide data exchange between said central control device and all PCUs of said at least two PCUs.

Each PCU of said at least one PCU is configured to provide a dedicated communication channel between said at least one control device and CMSs of any one string of the ESS. Each PCU may facilitate transmission, reception, and/or processing of data or signals between the at least one control device and said CMSs of any one string of the ESS. Each PCU may be configured to provide the exchange of information between different devices, systems, or networks by converting data into a format suitable for transmission and then receiving and interpreting incoming data.

Each PCU may comprise a communication interface to receive data from the at least one control device according to an initial communication protocol and transmit data received from the at least one control device along said dedicated communication channel according to a first communication protocol that is more suitable for remote communication.

The at least one PCU may be integrated with said at least one control device. In the case of a plurality of control devices, one PCU may be integrated with a respective control device. In the case of a central control device, said at least one PCU may be integrated with said central control device.

At least one PCU may be configured to boost signal strength of communication being transmitted via said dedicated communication channel. This may advantageously improve signal quality, ensuring that all communication is transmitted in a satisfactorily manner. Each of said at least two PCUs may be configured to boost signal strength of communication being transmitted via said respective dedicated communication channel.

According to one embodiment, said at least one PCU and said at least one control device are arranged in a control room at a remote location relative to said ESS. By arranging said at least one PCU and said at least one control device in a control room at said remote location, latency may advantageously be reduced. A shorter distance between any of said at least one PCU and said at least one control device may advantageously lead to stronger signal quality and more stable connections, reducing the risk of interference or loss of signal. Moreover, if a remote firmware loading process is determined to fail for any CMS of any one string, and the issue is suspected of being a PCU, the effort of diagnosing the PCU of relevance is reduced due to its proximity with said at least one control device.

A control room may refer to a designated space where operators and personnel monitor, manage, and/or control operations or systems within a facility, organization, or infrastructure. The control room may comprise a range of equipment such as monitors, communication tools, and control panels that provide real-time data and allow users to make decisions, execute commands, or troubleshoot issues. A control room may advantageously ensure smooth and efficient operations and allow fast response to emergencies or system failures.

According to one embodiment, the power supporting system comprises: at least one auxiliary communication unit, ACU, arranged in a respective string to bridge communication between CMSs of said string and the PCU associated with said string. Said dedicated communication channel comprises a remote communication channel portion providing communication between said PCU and at least a first ACU of said string and a local communication channel portion providing communication from each ACU of said at least one ACU in said string to CMSs communicatively connected with said at least one ACU.

At least one string of the ESS may comprise a plurality of ACUs. Each ACU may be configured to bridge communication between the PCU associated with said string and only a subset of all CMSs of said at least one string. For instance, the string may comprise a plurality of energy storage racks as previously described. Each rack may comprise an ACU. The ACU of each rack may be configured to bridge communication between the PCU associated with said string and the CMS associated with energy storage cells comprised in said energy storage rack. By the ACU, communication is advantageously relayed more efficiently between the at least one control device and CMSs of any one string of the ESS. The ACU may be configured to boost signal strength of communication being transmitted to said CMSs via said local communication channel portion.

According to one embodiment, each remote communication channel portion during use provides communication according to a first communication protocol for remote communication, and each local communication channel portion during use provides communication according to a second communication protocol for local communication. The first communication protocol and the second communication protocol are different or the same. Each ACU may be configured to perform protocol conversion to convert communication protocol of data communicated between the remote communication channel portion and the local communication channel portion. By implementing two different communication protocols for the different communication channel portions, the strength of the respective communication protocols may be leveraged to greater effect. By implementing the same communication protocol for the different communication channel portions, it removes the need of protocol conversion, which may advantageously improve communication speed.

The first communication protocol and/or the second communication protocol may be EtherCAT. EtherCAT is a communication protocol enabling real-time, highspeed communication, supporting data rates up to 100 Mbps or more. EtherCAT supports large networks of devices, allowing many nodes to be connected (up to 65,535 devices) without significant loss of performance. Thus, by using EtherCAT as the first communication protocol, the power supporting system advantageously provides robust remote communication for long range applications, e.g., 100 m, 1 km, 10 km or more. Further, using EtherCAT as the first communication protocol, the power supporting system advantageously provides great scalability. Moreover, EtherCAT may use standard Ethernet hardware, thus no special physical layer is needed beyond standard Ethernet infrastructure. The present disclosure is however not limited to such communication protocol, and other communication protocols may be utilized instead. At least one or each PCU may be an EtherCAT fiber optics junction box.

The first communication protocol and/or the second communication protocol may be CAN. CAN is a communication protocol enabling real-time communication with guaranteed message delivery, even in the presence of network congestion. Due to CAN's differential signaling and robust protocol design, using CAN as the second communication protocol advantageously provides high immunity to electromagnetic interference. Further, CAN has built-in error detection features (e.g., cyclic redundancy checks, bit stuffing) and can automatically re-transmit messages in case of communication errors. In addition, CAN may operate at moderate data rates (typically up to 1 Mbps), making it efficient for low-bandwidth applications. The present disclosure is however not limited to such communication protocol, and other communication protocols may be utilized instead. At least one or each ACU may be an EtherCAT CAN bridge.

According to one embodiment, all other ACUs in a respective string are communicatively connected in cascade with said first ACU of said string. This advantageously reduces the number of PCUs needed for each string of the ESS. Further, this advantageously simplifies connection between said at least one ACU with a respective PCU associated with said string. However, one or more ACUs in a respective string may be communicatively connected to two or more PCUs. This may advantageously improve redundancy.

According to one embodiment, said at least one control device comprises: a central control device configured to control said remote firmware loading process of CMSs in any string of said ESS, or a plurality of control devices, wherein each control device is configured to control said remote firmware loading process of CMSs in a respective string of said ESS. The at least one control device may be a central control device. The at least one control device may be a plurality of control devices.

By utilizing a central control device, control logic of the power supporting may be consolidated in one place, making system design and troubleshooting advantageously easier. It may also remove the need for managing synchronization and communication between multiple control devices. A single central control device may advantageously be used instead of a plurality of control devices to reduce hardware cost and maintenance efforts. A central control device may advantageously facilitate scaling of the power supporting system. Direct communication within the central control device may advantageously reduce latency and potential data loss compared to inter-control device communication. With fewer control devices, fewer potential failure points in the system are advantageously introduced.

By utilizing a plurality of control devices, redundancy is improved. As a non-limiting example, if a central control device experiences a fault, then control of remote firmware loading process is impacted for all CMSs of the power supporting system. By having a plurality of control devices, then a fault in one of said plurality of control devices does not impact the control of remote firmware loading process for all CMSs of the power supporting system, but only a sub-set thereof.

According to one embodiment, the power supporting system comprises at least one backup PCU configured to serve as a backup for at least one of said at least one PCU, and/or a secondary PCU configured to provide a redundant dedicated communication channel between at least one of said at least one control device and CMSs of one of said at least one string. The power supporting system may comprise at least one backup PCU for any one PCU or for each PCU enabling a respective dedicated communication channel to one or more CMSs of a respective string. If the PCU is determined to not operate as intended, the backup PCU may be operated to replace said PCU to provide said dedicated communication channel. By the backup PCU, redundancy of the power supporting system is advantageously enhanced.

According to one embodiment, said at least one energy storage cell is a battery, a super battery, a capacitor, or a supercapacitor.

Battery may refer to an energy storage device that converts stored chemical energy into electrical energy through electrochemical reactions.

Super-battery may refer to a more advanced form of a battery, which may include higher energy density, faster charging, longer lifespan, improved safety, or the use of innovative materials or technologies (e.g., solid-state batteries or graphene-based batteries).

Capacitor may refer to a passive electrical component that stores energy in an electric field, created between two conductive plates separated by an insulating material (dielectric).

Supercapacitor may refer to a high-capacity capacitor with significantly higher energy storage capabilities than standard capacitors. Supercapacitors may store energy through electrostatic charge separation at an interface between a solid electrode and an electrolyte. Supercapacitors may be configured to provide fast charging and discharging. Supercapacitors may advantageously provide high power density, and long cycle life but lower energy density compared to batteries.

According to one embodiment, said at least one control device is configured to perform said remote firmware loading process to update at least one CMS of a respective energy storage rack of said at least one string in parallel. Maintenance time may thereby be advantageously reduced.

According to one embodiment, each energy storage rack comprises at least one auxiliary communication unit of said at least one auxiliary communication unit. Said at least one energy storage rack may be configured as the energy storage racks described previously.

According to one embodiment, each energy storage rack of each string further comprises: a local control device configured to communicate with CMSs of said at least one energy storage module of said energy storage rack, wherein said at least one control device is configured to control, by communication via said at least one auxiliary communication unit, said remote firmware loading process to update at least one of said at least one local control device of at least one string. The local control device may be configured to control communication between CMSs of said rack and the at least one control device arranged remotely to the ESS. The local control device may be configured to monitor CMSs of said rack. The local control device may be configured to provide monitoring information of the CMSs of said rack to the at least one control device arranged remotely to the ESS.

According to one embodiment, at least one CMS is configured to: at least temporarily store a firmware to be used during said remote firmware loading process, and if said remote firmware loading process is determined to have failed, control a local firmware loading process to update said at least one CMS using the temporarily stored firmware. The at least one local bootloader may thus advantageously facilitate updating CMSs of said ESS. In particular, firmware to be used in the remote firmware loading process may be transmitted to a local memory storage module of the at least one local bootloader. The at least one control device arranged remotely to the ESS may re-attempt the remote firmware loading process for a CMS by using the firmware stored in the at least one local memory storage module. The at least one local bootloader may be configured to perform a local firmware loading process using the firmware stored in the at least one local memory storage module. The at least one local bootloader may perform the local firmware loading process following instructions from the at least one control device.

According to a second aspect of the disclosure, a method of updating cell management systems of an energy storage system, ESS, of a power supporting system is provided. The power supporting system may be as described with respect to the first aspect or any embodiment thereof. Said ESS comprises at least one string, each string comprising: at least two energy storage racks electrically connected in series, each energy storage rack comprising at least one energy storage module, each energy storage module comprising: at least one energy storage cell, and a cell management system for managing said at least one energy storage cell. The method comprises: using at least one control device to control a remote firmware loading process of said CMSs. Said remote firmware loading process comprises: transferring firmware to each CMS via dedicated communication channels provided by at least one primary communication unit, PCU, each communication channel providing communication between one of said at least one control device and CMSs of one of said at least one string, which firmware is usable to update each CMS. Said at least one PCU and said at least one control device are arranged remotely relative to said ESS. Said remote firmware loading process comprises: updating each CMS with said firmware.

The method advantageously provides remote loading of firmware of CMSs across energy storage racks of at least one string. By removing the requirement of connecting locally with each CMSs of the ESS to update firmware, CMSs can be updated without anyone on site, thereby facilitating the process of updating firmware of said CMSs.

As already mentioned above in connection to the first aspect, the dedicated communication channels providing communications may advantageously be used to verify firmware version of CMSs remotely. While firmware version can be manually verified by a user on site, or verified based on records of firmware updates, remote firmware version verification facilitates the process of verifying whether a firmware update is needed. As a non-limiting example, CMSs of the power supporting system may have different versions of firmware if one or more energy storage module have been replaced, and the CMS of the new energy storage module is provided with old firmware. Thus, the remote firmware loading process may be applied so as to update all CMSs or anyone in particular to a desired firmware version. The remote firmware loading process may also be applied if a current version of firmware is determined to contain a software defect or program anomaly to update all CMSs or anyone in particular to a desired firmware version.

Further, the method advantageously provides parallel loading of firmware of a selection of CMSs across energy storage racks in a single string and of a selection of CMSs across energy storage racks of multiple strings. This significantly reduces the time required to update a plurality of CMSs of an ESS with new firmware, which is particularly advantageous for large systems which may comprise up to thousands of CMSs or more. An energy storage rack may define a group of CMSs. The parallel loading of firmware may be initiated in parallel for groups of CMSs of said at least two energy storage racks. Each group of CMSs (of a respective energy storage rack) may be updated with firmware in a sequential manner.

According to one embodiment, said at least one control device is used to control a remote firmware loading process of said CMSs in at least one string in parallel and/or said CMSs of multiple strings in parallel. The method may involve using the power supporting system to carry out remote firmware loading process for any selection of CMSs in one string or across different strings, thereby advantageously reducing the time necessary to update all CMSs in need of a firmware update. As a non-limiting example, the at least one control device may control remote firmware loading process for any selection of CMSs in one string. As a non-limiting example, the at least one control device may control remote firmware loading process for all CMSs in one string. As a non-limiting example, the at least one control device may control remote firmware loading process for any selection of CMSs across one or more strings. As a non-limiting example, the at least one control device may control remote firmware loading process for all CMSs across one or more strings. As a non-limiting example, the at least one control device may control remote firmware loading process for all CMSs across all strings. The at least one control device may be configured to, alternatively or in combination, do the same according to any of the aforementioned non-limiting examples but for a local control device or any selection of local control devices.

According to one embodiment, the method comprises: if said firmware is determined to have transferred successfully to a CMS, or if said firmware is determined to be invalid for the CMS, performing the remote firmware loading process again for said CMS. The remote firmware loading process may fail for a plurality of reasons, such as abrupted communication, corrupted firmware, erroneous update of firmware. By performing the remote firmware loading process again, it may advantageously ensure that all CMSs being updated are in fact at least eventually updated in a satisfactory manner. This may advantageously remove the need of manual verification of firmware update. The at least one control device may be configured to receive firmware status information from each CMSs being updated with new firmware indicative of whether the remote firmware loading process was successful or not for said CMS. Said firmware status information may be received automatically after at least an attempt of firmware update of said CMS or upon the at least one control device requesting said firmware status information for any one CMS being updated.

According to one embodiment, the method comprises: receiving information, by means of a CMS, whether an energy storage cell of the ESS operates with an abnormal performance, said abnormal performance being a performance deviating from a target performance, and if said abnormal performance is determined to occur after said CMS is updated with new firmware, restoring firmware of said CMS to a previous firmware, which previous firmware is stored locally in the CMS, in a local control device, or provided via said remote firmware loading process. This may advantageously facilitate the power supporting system to operate at a satisfactory level.

According to one embodiment, the method comprises: if said firmware is determined to be invalid for a CMS, controlling firmware update of said CMS by means of a local control device or a bootloader of said CMS using received firmware. The at least one control device may control the remote firmware loading process as previously detailed. However, in the situation wherein said remote firmware loading process fails for any one CMS, a local control device or a bootloader of said CMS may facilitate the at least one control device to carry out the firmware loading process by performing a local firmware loading process. In this situation, the local control device or bootloader of said CMS does not perform a local firmware loading process on their own volition, rather such a process is preceded by the at least one control device having at least initiated the remote firmware loading process for said CMS. Thus, the at least one control device may be regarded as controlling said remote firmware loading process via one or more local control units (local control device or bootloader of said CMS).

According to one embodiment, if said firmware is determined to not have transferred successfully to said at least one CMS via said remote firmware loading process or a local firmware loading process, or if said firmware is determined to be invalid for said at least one CMS, receiving at said at least one control device an alert at least indicative that a manual firmware loading process for said CMS using a local service port is required. By this, the at least one control device may advantageously relay information to an operator of the at least one control device that a manual firmware loading process is required for one or more CMSs for which the remote firmware loading process failed. Said manual firmware loading process for said CMS uses a local service port. Said local service port may be a USB port, an Ethernet port, or any other suitable port for enabling data to be transferred from an external device to said CMS.

According to one embodiment, the method comprises determining whether a firmware is invalid for at least one CMS. The step of determining may be performed locally by a local control device. The step of determining may be performed remotely by said at least one control device. The step of determining whether a firmware is invalid for at least one CMS may comprise the at least one control device or said local control device verifying if the firmware to be used during the firmware loading process (remote or local) is compatible with said at least one CMS based on specifications of said at least one CMS, and determining said firmware as invalid if the firmware to be used does not meet said specifications.

According to one embodiment, the method comprises determining whether a firmware is transferred successfully to said at least one CMS via said remote firmware loading process or a local firmware loading process. The step of determining may be performed locally by a local control device. The step of determining may be performed remotely by said at least one control device. The step of determining whether a firmware is transferred successfully may include checking file integrity with checksum before and after transfer. As alternatives, transfer protocol verification, compare file sizes and/or cryptographic signature may be used.

According to one embodiment, if a firmware transfer from said particular PCU to an ACU is determined to have failed, said firmware is transferred from a backup PCU to said ACU. The method may comprise using at least one backup PCU for any one PCU or for each PCU enabling a respective dedicated communication channel to one or more CMSs of a respective string. If the PCU is determined to not operate as intended, the backup PCU may be operated to replace said PCU to provide said dedicated communication channel. By the backup PCU, redundancy of the power supporting system is advantageously enhanced.

According to one embodiment, each dedicated communication channel comprises a remote communication channel portion for providing communication between said PCU and at least a first ACU of said string and a local communication channel portion for providing communication from each ACU in said string to CMSs communicatively connected with said ACU.

Each ACU may be used to bridge communication between the PCU associated with said string and only a subset of all CMSs of said at least one string. For instance, the string may comprise a plurality of energy storage racks as previously described. Each rack may comprise an ACU. The ACU of each rack may be configured to bridge communication between the PCU associated with said string and the CMS associated with energy storage cells comprised in said energy storage rack. By the ACU, communication is advantageously relayed more efficiently between the at least one control device and CMSs of any one string of the ESS. The ACU may be used to boost signal strength of communication being transmitted to said CMSs via said local communication channel portion.

According to one embodiment, each remote communication channel portion provides communication according to a first communication protocol for remote communication, and each local communication channel portion provides communication according to a second communication protocol for local communication, wherein the first communication protocol and the second communication protocol are different or the same.

The first communication protocol and the second communication protocol are different or the same. Each ACU may be configured to perform protocol conversion to convert communication protocol of data communicated between the remote communication channel portion and the local communication channel portion. By implementing two different communication protocols for the different communication channel portions, the strength of the respective communication protocols may be leveraged to greater effect. By implementing the same communication protocol for the different communication channel portions, it removes the need of protocol conversion, which may advantageously improve communication speed.

According to a third aspect, a computer program is provided. The computer program comprises instructions which, when the program is executed by a computer, cause the computer to carry out the method according to the second aspect or any embodiments thereof.

According to a fourth aspect, a computer-readable storage medium is provided. The computer-readable storage medium comprises instructions which, when executed by a computer, cause the computer to carry out the method according to the second aspect or any embodiments thereof.

Effects and features of the second, third, and fourth aspects are largely analogous to those described above in connection with the first aspect. Embodiments mentioned in relation to the first aspect are largely compatible with the second, third, and fourth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device or system described or steps of the methods described as such device and method may vary. It is also to be understood that the terminology used herein is for purpose of describing particular embodiments only, and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of the Drawings

The invention will in the following be described in more detail with reference to the enclosed drawings, wherein:
Fig. 1 illustrates a schematic view of a power supporting system according to an embodiment;
Fig. 2 illustrates a schematic view of a power supporting system according to an embodiment;
Fig. 3a illustrates a schematic view of an energy storage rack of a power supporting system according to an embodiment;
Fig. 3b illustrates a schematic view of an energy storage rack of a power supporting system according to an embodiment, which energy storage rack includes a local control device; and
Fig. 4 illustrates a flow chart of at least a part of a firmware loading process of CMSs of a power supporting system according to an embodiment.

### Description of Embodiments

Hereinafter, the principle of the present disclosure will be described with reference to the illustrative embodiments. It should be understood that all these embodiments are given merely for the person skilled in the art to better understand and further practice the embodiments of the present disclosure, but not for limiting the scope of the claimed subject matter. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached drawings. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

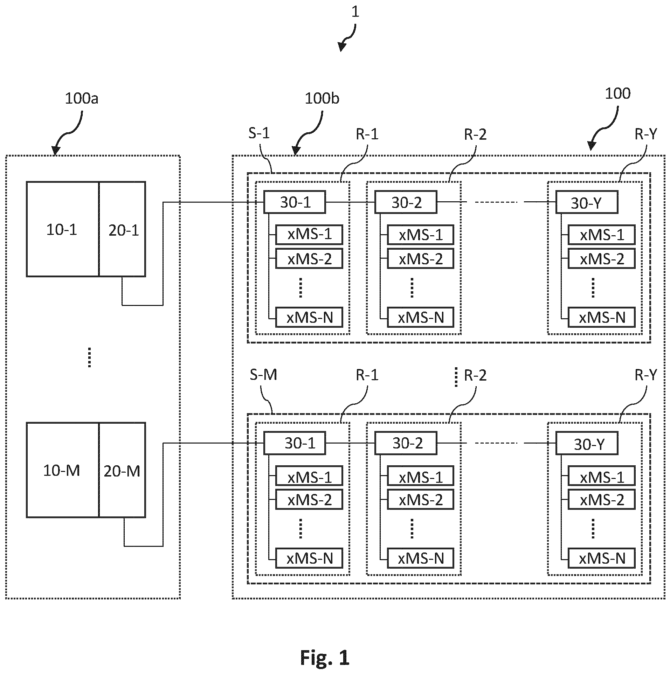

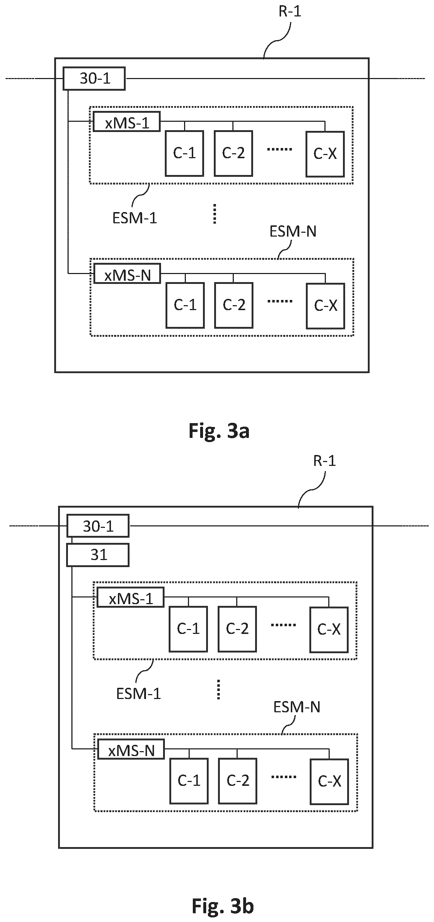

Fig. 1 illustrates a schematic view of a power supporting system 1 according to an embodiment. The power supporting system 1 comprises an energy storage system, ESS, 100. The energy storage system 100 comprises at least one string or at least two strings S-1, S-M. The energy storage system 100 may comprise any number of strings, i.e., M is equal to 2, 3, 4, 5, or more. It is also conceivable that the energy storage system 100 only comprises one string, i.e., M is equal to 1. Each string S-1, S-M comprises at least one energy storage module ESM-1, ESM-N (see Figs. 3a-3b). Here, N may be any integer greater than or equal to 1, i.e., 1, 2, 3, 4, 5, or more. According to one embodiment, each string S-1, S-M comprises a plurality of energy storage racks R-1, R-2, R-Y, wherein each energy storage rack comprises at least one energy storage module ESM-1, ESM-N of said at least one energy storage module ESM-1, ESM-N. Here, Y may be any integer greater than or equal to 1, i.e., 1, 2, 3, 4, 5, or more.

Each energy storage module ESM-1, ESM-N comprises at least one energy storage cell C-1, C-2, C-X, and a cell management system xMS-1, xMS-N configured to manage said at least one energy storage cell (see Figs. 3a-3b). Here, X may be any integer greater than or equal to 1, i.e., 1, 2, 3, 4, 5, or more. According to one embodiment, said at least one energy storage cell is a battery, a super-battery, a capacitor, or a super-capacitor. Different energy storage cells may comprise a different selection of a battery, a super-battery, a capacitor, or a super-capacitor so that the ESS comprises energy storage cells of two or more of said battery, super-battery, capacitor, super-capacitor or any combination thereof. In the case of an energy storage cell being a battery or super-battery, the cell management system configured to manage said battery or super-battery may be a battery management system. In the case of an energy storage cell being a capacitor or super-capacitor, the cell management system configured to manage said capacitor or super-capacitor may be a capacitor management system.

The power supporting system 1 schematically illustrated in Fig. 1 comprises a plurality of control devices 10-1, 10-M and at least two primary communication units, PCUs, 20-1, 20-M, each PCU 20-1, 20-M configured to provide a dedicated communication channel between a respective control device 10-1, 10-M and CMSs of a respective string S-1, S-M. In other words, a first PCU is configured to provide a first dedicated communication channel between a first control device 10-1 and CMSs of a first string S-1, and an M-th PCU 20-M is configured to provide an M-th communication channel between an M-th control device 10-M and CMSs of an M-th string S-M. Each pair of control device 10-1, 10-M and PCU 20-1, 20-M may be integrated. Alternatively, each pair of control device 10-1, 10-M and PCU 20-1, 20-M may be separate units.

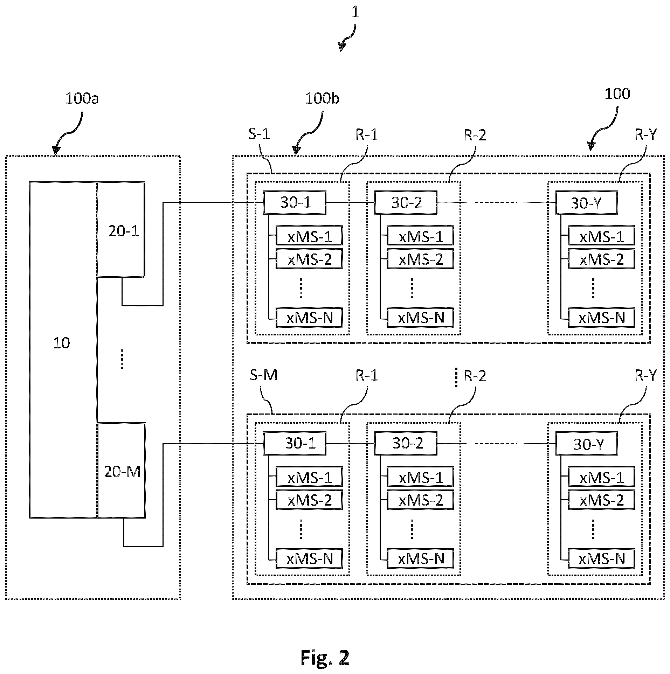

Fig. 2 illustrates a schematic view of a power supporting system 1 according to an embodiment. The power supporting system 1 schematically illustrated in Fig. 2 comprises a central control device 10 and at least two primary communication units, PCUs, 20-1, 20-M, each PCU 20-1, 20-M configured to provide a dedicated communication channel between the central control device 10 and CMSs of a respective string S-1, S-M. In other words, a first PCU is configured to provide a first dedicated communication channel between the central control device 10 and CMSs of a first string S-1, and an M-th PCU 20-M is configured to provide an M-th communication channel between the central control device 10 and CMSs of an M-th string S-M. Each PCU 20-1, 20-M may be integrated with the central control device 10. The central control device 10 and the PCUs 20-1, 20-M may be separate units.

Irrespective of whether the at least one control device 10, 10-1, 10-M is a central control device 10 or a plurality of control devices 10-1, 10-M, said at least one control device 10, 10-1, 10-M and said at least two PCUs 20-1, 20-M are arranged remotely relative to said ESS 100. As a non-limiting example, said at least one control device 10, 10-1, 10-M and said at least two PCUs 20-1, 20-M are arranged at a distance of at least 100 m from said ESS 100. As a non-limiting example, said at least one control device 10, 10-1, 10-M and said at least two PCUs 20-1, 20-M are arranged at a distance of 2 km or less from said ESS 100. It should however be understood that the present disclosure is not limited to any particular distance between said at least one control device 10, 10-1, 10-M and said at least two PCUs 20-1, 20-M and said ESS.

Moreover, irrespective of whether the at least one control device 10, 10-1, 10-M is a central control device 10 or a plurality of control devices 10-1, 10-M, said at least one control device 10, 10-1, 10-M is configured to control, by communication via said dedicated communication channels, a remote firmware loading process to update said CMSs xMS-1, xMS-N of said at least two strings S-1, S-M. The remote loading of firmware of CMSs xMS-1, xMS-N across multiple strings S-1, S-M advantageously removes the requirement of connecting locally with each CMSs xMS-1, xMS-N of the ESS 100 to update firmware. Thus, CMSs xMS-1, xMS-N of a power supporting system 1 can be updated without anyone on site at the ESS 100, thereby facilitating the process of updating firmware of said CMSs. Also, the power supporting system 1 advantageously provides parallel loading of firmware of CMSs xMS-1, xMS-N of a single string S-1, S-M and of CMSs xMS-1, xMS-N across multiple strings S-1, S-M. This significantly reduces the time required to update a plurality of CMSs xMS-1, xMS-N of the ESS 100 with new firmware, which is particularly advantageous for large systems which may comprise up to thousands of CMSs or more.

As described above, said at least one control device 10, 10-1, 10-M and said at least two PCUs 20-1, 20-M are arranged remotely relative to said ESS 100. According to one embodiment, said at least two PCUs 20-1, 20-M and said at least one control device 10, 10-1, 10-M are arranged in a control room 100a at a remote location relative to said ESS 100. The ESS 100 may be arranged in an ESS facility 100b. By arranging said at least two PCUs and said at least one control device in a control room at said remote location, a plurality of advantages may be achieved, such as reduced latency and/or facilitated trouble shooting in the event of a failed firmware update of any one CMS of the ESS 100. Moreover, the control room 100a may comprise a range of equipment such as monitors, communication tools, and control panels so as to facilitate control of said remote firmware loading process and monitor progress thereof.

The CMSs of the ESS 100 may be updated with firmware in a partially parallel and a partially sequential manner. As a non-limiting example, each string S-1, S-M of said two or more strings S-1, S-M may comprise a plurality of energy storage racks R-1, R-2, R-Y connected in series. The remote firmware loading process may be applied to all racks in a string in parallel, while each CMS of each energy storage rack R-1, R-2, R-Y is updated in a sequential manner, for instance starting with a first CMS xMS-1 and completing with the N-th CMS xMS-N or in any other order.

As schematically illustrated in both Fig. 1 and Fig. 2, the power supporting system 1 may according to one embodiment comprise at least one auxiliary communication unit, ACU, 30-1, 30-2, 30-Y, arranged in a respective string S-1, S-M to bridge communication between CMSs xMS-1, xMS-N of said string S-1, S-M and the PCU 20-1, 20-M associated with said string S-1, S-M. In other words, a first string S-1 may comprise at least one ACU 30-1, 30-2, 30-Y arranged to bridge communication between CMSs xMS-1, xMS-N of said string S-1, S-M and a first PCU 10-1 associated with said string S-1, whereas an M-th string S-M may comprise at least one ACU 30-1, 30-2, 30-Y arranged to bridge communication between CMSs xMS-1, xMS-N of said string S-1, S-M and an M-th PCU 10-M associated with said M-th string S-M. Each string may comprise two or more ACUs 30-1 30-2, 30-Y, xMS-N. In the case of each string comprising two or more energy storage racks R-1, R-2, R-Y, each energy storage rack R-1, R-2, R-Y may comprise a respective ACU 30-1, 30-2, 30-Y of said two or more ACUs 30-1, 30-2, 30-Y.

Each dedicated communication channel between a respective PCU 20-1, 20-M and respective CMSs of each string S-1, S-M may comprise a remote communication channel portion and a local communication channel portion. Each remote communication channel portion may be established between a PCU and at least a first ACU 30-1 of the string said PCU is associated with. Each local communication channel portion may be established between each ACU and a CMS communicatively connected with said at least one ACU 30-1, 30-2, 30-Y. According to one embodiment, all other ACUs 30-2, 30-Y in a respective string S-1, S-M are communicatively connected in cascade with said first ACU 30-1 of said string S-1, S-M. In other words, a plurality of dedicated communication channels of CMSs in one string may share a common remote communication channel portion. Further, dedicated communication channels to CMSs communicatively connected to other ACUs than the first ACU 30-1 may comprise one or more cascade communication channel portions. Two or more local communication channel portions from a single ACU to different CMSs may comprise at least one shared local communication channel portion. Each remote communication channel portion during use provides communication according to a first communication protocol for remote communication. Each local communication channel portion during use provides communication according to a second communication protocol for local communication. The first communication protocol and the second communication protocol are different or the same. As a non-limiting example, the first communication protocol is EtherCat. As a non-limiting example, the second communication protocol is CAN.

Moreover, in the case of the first communication protocol being EtherCat, then any PCUs of said at least two PCUs may be an EtherCat fiber optics junction box. In the case of the second communication protocol being CAN, then any ACUs of said at least one ACU of each string may be an EtherCat CAN bridge. A D-sub cable may be used to communicatively connect each CMS with the ACU said CMS is associated with. Any of said dedicated communication channels or portions thereof may be implemented or further implemented by a respective at least one optical fiber. Any cascade communication channel portion may be implemented by a cascade EtherCat CAN connection optical fiber.

Fig. 3a illustrates a schematic view of an energy storage rack R-1 of a power supporting system 1 according to an embodiment. The energy storage rack R-1, which may be anyone energy storage rack of any string S-1, S-M, comprises an auxiliary communication unit ACU 30-1 and two or more energy storage modules ESM-1, ESM-N. Each energy storage module ESM-1, ESM-N comprises at least one energy storage cell C-1, C-2, C-X. Each energy storage module ESM-1, ESM-N comprises a cell management system, CMS, xMS-1, xMS-N configured to be communicatively connected with each energy storage cell C-1, C-2, C-X. The ACU 30-1 is communicatively connected with each CMS xMS-1, xMS-N by a local communication channel portion. The ACU 30-1 is communicatively connected with a first PCU (not shown in Fig. 3a), whereby a remote communication channel portion is provided between the ACU 30-1 and the first PCU. The ACU 30-1 may further be configured to be communicatively connected with a second ACU (not shown in Fig. 3a), whereby a cascade communication channel portion is formed between the ACU 30-1 and the second ACU.

Fig. 3b illustrates a schematic view of an energy storage rack R-1 of a power supporting system 1 according to an embodiment, which energy storage rack includes a local control device 31. The local control device 31 may be configured to control a local firmware loading process should a firmware update fail for anyone CMS xMS-1, xMS-N of said energy storage rack R-1 during the remote firmware loading process. The local control device 31 may be configured to store a copy of the firmware to be used during the remote firmware loading process and use the same during the local firmware loading process.

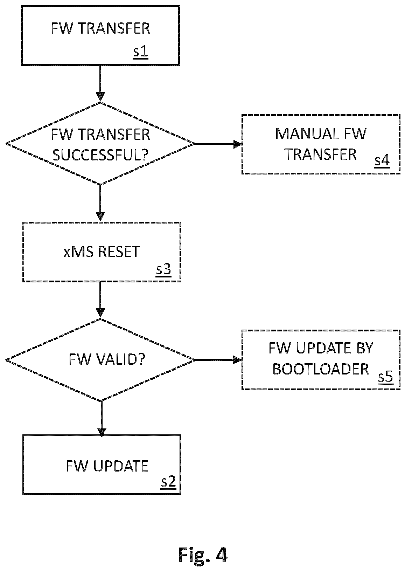

Fig. 4 illustrates a flow chart of at least a part of a firmware loading process of CMSs of a power supporting system according to an embodiment. The power supporting system may be the power supporting system 1 previously described. The method comprises using at least one control device 10, 10-1, 10-M to control a remote firmware loading process of CMSs xMS-1, xMS-N of any one or of each string of the power supporting system 1. The at least one control device 10, 10-1, 10-M may be a central control device as previously described or a plurality of control devices as previously described. Said at least two PCUs 20-1, 20-M and said at least one control device 10, 10-1, 10-M are arranged remotely relative to said ESS 100.

The remote firmware loading process comprises transferring s1 firmware to each CMS xMS-1, xMS-N via dedicated communication channels provided by at least two primary communication units, PCUs, 20-1, 20-M, each communication channel providing communication between one of said at least one control device 10, 10-1, 10-M and CMSs xMS-1, xMS-N of one of said strings S-1, S-M, which firmware is usable to update each CMS xMS-1, xMS-N. The remote firmware loading process comprises updating s2 each CMS xMS-1, xMS-N with said firmware. The firmware loading process advantageously allows for hardware to be placed at a remote location, e.g., a control room, the remote firmware loading process can be performed remotely.

The firmware update of the remote firmware loading process may be adapted to follow IS 14229 standard, wherein the firmware update comprises a first phase and a second phase. The first phase may start with establishing correct firmware transfer settings and end with transfer of the firmware to at least one energy storage module of a respective string. The second phase may involve resetting the at least one module and switching to the new firmware.

As illustrated in Fig. 4, firmware is sent from the at least one control device 10, 10-1, 10-M, to the energy storage modules in each string through dedicated communication channel. Each CMS may be equipped with dual memory modules which allows the CMS to receive firmware in one memory module while existing firmware is executed in the other memory module. Thus, said firmware transfer may end with said firmware being uploaded to the free memory bank. With the firmware transfer complete, a bootloader of the CMS may initiate a power reset. On power reset, the new firmware is validated by the bootloader. If the firmware is valid, then said CMS is switched to the new firmware. If the firmware is invalid, the bootloader executes the updating sequence itself. In case of failure in updating some modules from remote, i.e., via said at least one control device, the energy storage modules can also be updated manually using the service port. After the update, if the new firmware shows any undesired behavior, then the firmware can be switched back to the previous version. CMSs adapted with dual memory modules provide the ability to roll back to previous version of firmware. One example of implementing this is to simply toggle the SWAP control bit in the bootloader again. Thus, firmware can be switched back to old firmware without repeating the whole firmware update process.

Further, said at least one control device 10, 10-1, 10-M is used to control a remote firmware loading process of said CMSs xMS-1, xMS-N in at least one string in parallel and/or said CMSs xMS-1, xMS-N of multiple strings in parallel.

According to one embodiment, the method further comprises: if said firmware is determined to not have transferred successfully to a CMS xMS-1, xMS-2, xMS-N, or if said firmware is determined to be invalid for the CMS xMS-1, xMS-2, xMS-N, performing the remote firmware loading process again for said CMS xMS-1, xMS-2, xMS-N.

The method may further comprise one or more steps. For instance, the method may comprise: receiving information, by means of a CMS xMS-1, xMS-2, xMS-N, whether an energy storage cell C-1, C-2, C-X of the ESS 100 operates with an abnormal performance, said abnormal performance being a performance deviating from a target performance.

The method may further comprise: if said abnormal performance is determined to occur after said CMS xMS-1, xMS-2, xMS-N is updated with new firmware, restoring firmware of said CMS xMS-1, xMS-2, xMS-N to a previous firmware, which previous firmware is stored locally in the CMS xMS-1, xMS-2, xMS-N, in a local control device, or provided via said remote firmware loading process.

The method may further comprise: if said firmware is determined to be invalid for a CMS, initiating controlling s5 firmware update of said CMS xMS-1, xMS-2, xMS-N by means of a local control device or a bootloader of said CMS using received firmware.

The method may further comprise: if said firmware is determined to not have transferred successfully to said at least one CMS xMS-1, xMS-2, xMS-N via said remote firmware loading process or a local firmware loading process, or if said firmware is determined to be invalid for said at least one CMS xMS-1, xMS-2, xMS-N, receiving s4 at said at least one control device an alert at least indicative that a manual firmware loading process for said CMS xMS-1, xMS-2, xMS-N using a local service port is required.

The method may further comprise: if a firmware transfer from said particular PCU 20-1, 20-M to an ACU 30-1, 30-2, 30-Y is determined to have failed, transferring said firmware from a backup PCU to said ACU 30-1, 30-2, 30-Y.

While the foregoing is directed to embodiments of the disclosure, other and further embodiments may be devised without parting from the inventive concept discussed herein. The scope of the invention is however determined by the claims.

## Claims

1. A power supporting system (1) comprising:
an energy storage system (100), ESS, comprising at least two strings (S-1, S-M), each string (S-1, S-M) comprising at least two energy storage racks electrically connected in series, each energy storage rack comprising:
at least one energy storage module (ESM-1, ESM-N), each energy storage module (ESM-1, ESM-N) comprising:
at least one energy storage cell (C-1, C-2, C-X), and
a cell management system (xMS-1, xMS-N) configured to
manage said at least one energy storage cell,
at least one control device (10, 10-1, 10-M), and
at least one primary communication unit (20-1, 20-M), PCU, each PCU (20-1, 20-M) configured to provide a dedicated communication channel between at least one of said at least one control device (10, 10-1, 10-M) and CMSs (xMS-1, xMS-N) of one of said at least one string (S-1, S-M);
wherein
said at least one control device (10, 10-1, 10-M) and said at least one PCU (20-1, 20-M) are arranged remotely relative to said ESS (100), and
said at least one control device (10, 10-1, 10-M) is configured to control, by communication via said dedicated communication channels, a remote firmware loading process to update said CMSs (xMS-1, xMS-N) of said at least one string (S-1, S-M).

2. Power supporting system according to claim 1, wherein said at least one PCU (20-1, 20-M) and said at least one control device (10, 10-1, 10-M) are arranged in a control room at a remote location relative to said ESS (100).

3. Power supporting system according to any of claims 1-2, further comprising:
at least one auxiliary communication unit (30-1, 30-2, 30-Y), ACU, arranged in a respective string (S-1, S-M) to bridge communication between CMSs (xMS-1, xMS-N) of said string (S-1, S-M) and the PCU (20-1, 20-M) associated with said string (S-1, S-M),
wherein said dedicated communication channel comprises a remote communication channel portion providing communication between said PCU (20-1, 20-M) and at least a first ACU (30-1) of said string (S-1, S-M) and a local communication channel portion providing communication from each ACU (30-1, 30-2, 30-Y) of said at least one ACU in said string (S-1, S-M) to CMSs (xMS-1, xMS-N) communicatively connected with said ACU (30-1, 30-2, 30-Y).

4. Power supporting system according to claim 3, wherein
each remote communication channel portion during use provides communication according to a first communication protocol for remote communication, and
each local communication channel portion during use provides communication according to a second communication protocol for local communication,
wherein the first communication protocol and the second communication protocol are different or the same.

5. Power supporting system according to any of claims 3-4, wherein all other ACUs (30-2, 30-Y) in a respective string (S-1, S-M) are communicatively connected in cascade with said first ACU (30-1) of said string (S-1, S-M).

6. Power supporting system according to any of the preceding claims, wherein said at least one control device (10, 10-1, 10-M) comprises:
a central control device (10) configured to control said remote firmware loading process of CMSs (xMS-1, xMS-2, xMS-N) in any string (S-1, S-M) of said ESS (100), or
a plurality of control devices (10-1, 10-M), wherein each control device (10-1, 10-M) is configured to control said remote firmware loading process of CMSs (xMS-1, xMS-2, xMS-N) in a respective string (S-1, S-M) of said ESS (100).

7. Power supporting system according to any of the preceding claims, further comprising:
at least one backup PCU configured to serve as a backup for at least one of said at least one PCU (20-1, 20-M), and/or
a secondary PCU configured to provide a redundant dedicated communication channel between at least one of said at least one control device (10, 10-1, 10-M) and CMSs (xMS-1, xMS-N) of one of said at least one string (S-1, S-M).

8. Power supporting system according to any of the preceding claims, wherein said at least one energy storage cell (C-1, C-2, C-X) is a battery, a super battery, a capacitor, or a supercapacitor.

9. Power supporting system according to any of the preceding claims, wherein said at least one control device is configured to perform said remote firmware loading process to update at least one CMS (xMS-1, xMS-N) of a respective energy storage rack of said at least one string in parallel.

10. Power supporting system according to any of the preceding claims at least in combination with claim 3, each energy storage rack comprising
at least one auxiliary communication unit (30-1, 30-2, 30-Y) of said at least one auxiliary communication unit (30-1, 30-2, 30-Y).

11. Power supporting system according to claim 10, wherein each energy storage rack of each string further comprises:
a local control device configured to communicate with CMSs of said at least one energy storage module of said energy storage rack.

12. Power supporting system according to claim 11, wherein at least one local bootloader of a CMS is configured to:
at least temporarily store a firmware to be used during said remote firmware loading process, and
if said remote firmware loading process is determined to have failed, control a local firmware loading process to update said CMS (xMS-1, xMS-N).

13. Method of updating cell management systems of a power supporting system comprising an energy storage system, ESS, said ESS comprising at least one string (S-1, S-M), each string (S-1, S-M) comprising:
at least two energy storage racks electrically connected in series, each energy storage rack comprising at least one energy storage module (ESM-1, ESM-N), each energy storage module (ESM-1, ESM-N) comprising:
at least one energy storage cell (C-1, C-2, C-X), and
a cell management system (xMS-1, xMS-N) for managing said at least one energy storage cell,
the method comprising:
using at least one control device (10, 10-1, 10-M) to control a remote firmware loading process of said CMSs (xMS-1, xMS-N), which remote firmware loading process comprises:
transferring (s1) firmware to each CMS (xMS-1, xMS-N) via dedicated communication channels provided by at least one primary communication unit (20-1, 20-M), PCU, each communication channel providing communication between one of said at least one control device (10, 10-1, 10-M) and CMSs (xMS-1, xMS-N) of one of said at least one string (S-1, S-M), which firmware is usable to update each CMS (xMS-1, xMS-N),
updating (s2) each CMS (xMS-1, xMS-N) with said firmware,
wherein said at least one PCU (20-1, 20-M) and said at least one control device (10, 10-1, 10-M) are arranged remotely relative to said ESS (100).

14. Method according to claim 13, wherein said at least one control device (10, 10-1, 10-M) is used to control a remote firmware loading process of a selection of said CMSs (xMS-1, xMS-N) in at least one string in parallel and/or a selection of said CMSs (xMS-1, xMS-N) of multiple strings in parallel.

15. Method according to any of claims 13-14, further comprising:
if said firmware is determined to not have transferred successfully to a CMS (xMS-1, xMS-2, xMS-N), or if said firmware is determined to be invalid for the CMS (xMS-1, xMS-2, xMS-N), performing the remote firmware loading process again for said CMS (xMS-1, xMS-2, xMS-N).

16. Method according to any of claims 13-15, further comprising:
receiving information, by means of a CMS (xMS-1, xMS-2, xMS-N), whether an energy storage cell (C-1, C-2, C-X) of the ESS (100) operates with an abnormal performance, said abnormal performance being a performance deviating from a target performance, and
if said abnormal performance is determined to occur after said CMS (xMS-1, xMS-2, xMS-N) is updated with new firmware, restoring firmware of said CMS (xMS-1, xMS-2, xMS-N) to a previous firmware, which previous firmware is stored locally in the CMS (xMS-1, xMS-2, xMS-N), in a local control device, or provided via said remote firmware loading process.

17. Method according to any of claims 11-14, further comprising:
if said firmware is determined to be invalid for a CMS, controlling (s5) firmware update of said CMS (xMS-1, xMS-2, xMS-N) by means of a local control device or a bootloader of said CMS using received firmware, and/or
if said firmware is determined to not have transferred successfully to said at least one CMS (xMS-1, xMS-2, xMS-N) via said remote firmware loading process or a local firmware loading process, or if said firmware is determined to be invalid for said at least one CMS (xMS-1, xMS-2, xMS-N), receiving (s4) at said at least one control device an alert at least indicative that a manual firmware loading process for said CMS (xMS-1, xMS-2, xMS-N) using a local service port is required, and/or
if a firmware transfer from said particular PCU (20-1, 20-M) to an ACU (30-1, 30-2, 30-Y) is determined to have failed, transferring said firmware from a backup PCU to said ACU (30-1, 30-2, 30-Y).

18. Method according to any of claims 13-16, wherein
each dedicated communication channel comprises a remote communication channel portion for providing communication between said PCU (20-1, 20-M) and at least a first ACU (30-1) of said string (S-1, S-M) and a local communication channel portion for providing communication from each ACU (30-1, 30-2, 30-Y) in said string (S-1, S-M) to CMSs (xMS-1, xMS-N) communicatively connected with said ACU (30-1, 30-2, 30-Y).

19. Method according to claim 18, wherein
each remote communication channel portion provides communication according to a first communication protocol for remote communication, and
each local communication channel portion provides communication according to a second communication protocol for local communication,
wherein the first communication protocol and the second communication protocol are different or the same.
